# EUROPEAN PATENT SPECIFICATION

(11) **EP 2 029 293 B1**
(45) Date of publication and mention of the grant of the patent: **09.05.2018**
(21) Application number: 07733162.7
(22) Date of filing: 11.06.2007
(51) Int. Cl.: B09C 1/10, B09B 3/00, C05F 17/00, C05F 3/00, C05F 17/02

(54) **METHOD FOR TREATMENT OF OIL AND/OR GAS FIELD WASTE AND BY PRODUCT MATERIALS**
VERFAHREN ZUR BEHANDLUNG VON ÖL- UND/ODER GASFELDABFALL- UND NEBENPRODUKTMATERIALIEN
PROCÉDÉ DE TRAITEMENT DE DÉCHETS ET DE SOUS-PRODUITS DE CHAMPS DE PÉTROLE ET/OU DE GAZ NATUREL

(30) Priority: 09.06.2006 GB 0611391; 22.12.2006 GB 0625782; 01.03.2007 GB 0703960
(43) Date of publication of application: 04.03.2009
(73) Proprietor: Envireneer R&D Limited, Edinburgh EH3 9GL (GB)
(72) Inventor: HEPBURN, Maureen Beatrice, Aberdeenshire AB51 4ZZ (GB); SMITH, John Alexander, Aberdeen, AB12 3DF (GB); PHILLIPS, Allister James William, Dundee DD2 2LX (GB); DE JAGER, Vernon, Aberdeen AB24 4HX (GB)
(74) Representative: Murgitroyd & Company
(86) International application number: PCT/GB2007/002153
(87) International publication number: WO 2007/141556

(56) References cited:
- EP-A- 1 027 940
- AT-B- 411 651
- DE-A1- 3 806 820
- DE-A1- 4 031 862
- US-A- 4 494 975
- US-A1- 2003 098 180
- US-A1- 2003 209 045
- US-A1- 2004 115 090
- US-A1- 2005 039 656
- K.S. JORGENSEN, J. PUUSTINEN, A.-M. SUORTTI: "Bioremediation of petroleum hydrocarbon-contaminated soil by composting in biopiles" ENVIRONMENTAL POLLUTION, no. 107, 2000, pages 245-254, XP002490888 Elsevier
- BLANCA ANTIZAR-LADISLAO, JOSEPH LOPEZ-REAL, ANGUS J. BECK: "Laboratorz studies of the remediation of polycyclic aromatic hydrocarbon contaminated soil by in-vessel composting" WASTE MANAGEMENT, no. 25, 2005, pages 281-289, XP002490889 Elsevier
- V. SASEK, M. BHATT, T. CAJTHAML, K. MALACHOVA, D. LEDNICKA: "Compost-Mediated Removal of Polycyclic Aromatic Hydrocarbons from Contaminated Soil" ARCHIVES OF ENVIRONMENTAL CONTAMINATION AND TOXICOLOGY, no. 44, 2003, pages 336-342, XP002490890 Elsevier

## Description

This invention relates to a method of treatment of material, particularly the treatment of waste and by-product material such as organic and inorganic hydrocarbon waste generated in the drilling and operation of oil and gas wells.

Waste and by-product materials from oil and gas wells are typically contaminated by crude residues from the well itself, or from oil-based and water based drilling muds used in the drilling process. For example, during the drilling phase of each well, small pieces of the rock being drilled are chipped away by the drill bit at the end of the drill string. These are generally known as cuttings or drill cuttings in the art. The drill cuttings are washed up the borehole away from the drill bit by drilling mud, and are recovered at the surface where considerable effort is expended in the separation of the drilling mud from the cuttings. Separation of the drill cuttings from the contaminating mud and the residual hydrocarbons that permeate the drill cuttings is important for several reasons. The drilling mud is a highly engineered fluid that is expensive, and recycling it back into the well to recover additional drill cuttings has economic benefits. In addition, it is environmentally unacceptable to dump waste and by-products contaminated with either the exogenous drilling mud, or the indigenous hydrocarbons produced from the well, so before the drilling wastes and by-products can be disposed of properly, the levels of contaminating organic and inorganic compounds (from production fluids and drilling mud) need to be reduced to acceptable levels.

Current solutions to this problem are generally related to stringent separation procedures in shale shakers and the like, to physically separate the cuttings from the contaminating hydrocarbon fluids, after which, the cuttings are usually dumped at sea, or sent to landfill.

DE4031862 and AT411651 disclose known methods of treating soil and waste which are useful for understanding the invention.

In accordance with the present invention there is provided a method as claimed in claim 1.

The present invention is typically suited to the treatment of waste and by-product materials from oil and gas wells that are contaminated by organic compounds, such as hydrocarbon residues, either from oil, water or synthetic based drilling muds, or from hydrocarbons produced from the well. Embodiments of the invention are also suitable for the treatment of wastes and by-products having inorganic contamination, such as sulphates, chlorides, formates and heavy metals. Other embodiments of the invention are suitable for reducing contamination in other waste materials, such as biological waste, for example, animal waste from slaughterhouses, or food wastes from factories.

The composting is typically accomplished by an endogenous microbial population on the composted mixture, which also comprises a feeder material to provide N and C sources for the microbes, as well as the contaminated waste or by-product material to be treated.

The microbes typically degrade or consume the contamination on the waste or by-product materials being treated and use these contaminating compounds as metabolic substrates for their normal life cycle. The contaminating products can typically come from inorganic or organic drilling muds, and can supply substrate compounds that may be used in microbial metabolism, such as glycol, sulphates, chloride salts, sodium formate, KCl, NaCl, Barium and other constituents of drilling muds.

The feeder material can comprise biological material that is high in carbon sources such as fruit and vegetable waste, bark and twigs, sawdust, shavings and chipped wood, shredded paper and cardboard. The feeder material can comprise biological material that is high in N sources such as plant waste, leaves, grass and plant cuttings and green sawdust. Typically, the biological material provides a nitrogen source and a carbon source for the composting operations. A good source of nitrogen for the composting operations is manure and frequently the biological feeder materials can comprise animal bedding, for example, hen pen (a mixture of chicken manure and wood shavings, wood chips and sawdust, gathered from the floor of hen houses), pig pen, fish waste gathered from fish factories and other plant or animal sources of nitrogenous waste material.

Typically, the waste products are contaminated by organic residues, and most typically the hydrocarbon-contaminated waste products contain long-chain carbon residues. Typical chain lengths exceed five carbon atoms, and particularly more than ten carbon atoms. For example, C₁₂ to C₁₈ carbon chains are suitable for treatment by the present method. Up to C₃₀, for example C₂₄ to C₂₈, is also treatable using the present invention. Shorter chain hydrocarbons can also be treated, for example between 5 and 10 carbon atoms. Longer chain hydrocarbons can be treated with the method of the invention. For example, very long chain hydrocarbons having chain lengths of 50-100 or even of several hundred carbon atoms, e.g. 500-1000 carbon atoms, can be effectively treated by the method of the invention.

The composting generally makes use of the indigenous flora of microbes present on the waste and feeder material being treated in order to perform the composting operation, but in certain embodiments of the invention, an exogenous source of microbes can be added to the composting mix in order to degrade particular contaminants on the waste or by-product material. Typically, the microbial flora (indigenous or exogenous) are thermophilic hydrocarbon degraders such as *Bacillus sp., Pseudomonas sp.* and *Amycolata sp..* Additional useful microbial flora include *Promicromonospora sp., Microbacterium barkeri, Rhodococcus globerulus, Geobacillus pallidus* and *Geobacillus subterraneus.* The following microbial flora deposited in NCIMB may be additionally useful.

| Species | Deposit number, date |
|---|---|
| *Promicromonospora enterophila* | NCIMB618, 01/01/1959 |
| *Promicromonospora sp* | NCIMB30194, 04/09/2006 |
| *Promicromonospora citrea* | NCIMB10170, 16/02/1968 |
| | NCIMB 12149, 03/09/1985 |
| | NCIMB 12920, 27/09/1989 |
| | NCIMB 12921, 27/09/1989 |
| | |
| *Microbacterium barkeri* | NCIMB9658, 03/03/1965 |
| | NCIMB702301, 01/01/1980 |
| | NCIMB30193, 04/09/2006 |
| | |
| *Rhodococcus globerulus* | NCIMB12315, 04/08/1986 |
| | NCIMB30195, 04/09/2006 |
| | |
| *Geobacillus pallidus* | NCIMB 41468, 04/09/2006 |
| | NCIMB 41469, 04/09/2006 |
| | |
| *Geobacillus subterraneus* | NCIMB13892, 29/04/2002 |
| | NCIMB30191, 04/09/2006 |
| | NCIMB30192, 04/09/2006 |

Thermophilic hydrocarbon degraders are good options, because they can withstand higher temperatures during the composting operation, but other microbes might degrade and metabolise particular contaminants more effectively than others, and could be added if desired.

A nutrient may be added during the composting reaction to aid bacterial growth and help establish the dominant bacterial species within the reaction, for example, by introduction of a liquid or use of a spray

In typical embodiments of the invention, the exogenous feeder materials added are carefully controlled to encourage the microbial flora in the composting mix to break down the contaminants (e.g. the long chain hydrocarbons) on the waste and by-product material rather than the short chain carbon residues in the feeder material. Therefore, feeder materials with a high nitrogen content are preferred.

An exogenous carbon source from the feeder material is also useful to provide an initial boost to the microbial population in order to achieve a population suitable for effective degradation of the longer chain hydrocarbon contaminants present on the waste material being treated. Therefore, a balance of the high -C and high -N feeder materials is typically maintained throughout the composting operation to control the available amounts of carbon from the feeder material and the waste material. Fruit and vegetable material is a useful feeder material for initiating the composting procedure, and is typically added to the initial mix in order to raise the composting microbes to the desired levels of population and activity.

In some embodiments bulky plant material (such as wood chippings) is added not only to provide an additional carbon source for the microbes, but also to provide a support matrix for the composting method. The bulky wood chippings and the like create many air spaces between them and enhance aeration in the mixture, and also promote microbial mobility within the mixture.

Aeration and agitation can also be carried out by injection of compressed gasses into the reaction mixture, for example compressed air. The injected gas can be heated or cooled to the ambient temperature of the mixture before injection if desired. Injection of compressed air enhances the aeration by physically agitating the mixture, and by circulating more air within the reaction chamber.

Typically, the feeder material is shredded before being mixed with the waste material being treated.

The material being composted is typically agitated during the process. The agitation is typically achieved by an agitation device, e.g. an auger or some other tilling device, which moves, lifts, mixes or otherwise agitates the material within the composting chamber. The chamber is typically cylindrical and the agitation device, e.g. an auger or other tilling device, typically has blades that extend across the whole diameter of the cylinder. The chamber is preferably sealed or covered. Other shapes of chamber are suitable, such as those with square or rectangular cross-sections. An elongate chamber is preferred. Use of the chamber facilitates the composting mixture to reach a critical mass at which point the composting reaction becomes self-sustaining.

The agitation device, for example the auger, typically moves, lifts, mixes or otherwise agitates the material being composted and ensures sufficient aeration during the composting process so that the microbial population has improved access to the contaminants from the material being composted, and so that substantially all of the contaminants in the mixture are aerobically degraded by the microbial population. The auger is set to turn the material being composted intermittently during the process, for example to operate one or two revolutions or a fraction of one revolution (each movement lasting for a short period such as one or two minutes) once or twice every hour or so during the composting process.

The chamber can be horizontal, but in some embodiments it can be arranged with its central axis oriented upwards, either inclined slightly or vertical, so that the material being composted falls to the bottom of the chamber, and is lifted by the tilling device towards the top of the chamber. The composted material can typically be withdrawn from the base of the chamber and new material can typically be fed into the top.

Generally, the composting process is carried out at between 40°C and 75°C, e.g. 60°C.

The material being treated is typically drill cuttings, but oil field slops and other waste materials generated during the drilling and production of oil and gas wells can also be treated in the invention.

Embodiments of the present invention can optionally remove the need to pre-treat or pre-wash the cuttings to remove, reduce or alter salt contaminants. Salts present on the cuttings can instead be utilised as part of the composting reaction and improve and aid the composting reaction. Thus, typically, no additional chemicals are needed to be added into the composting process, thus reducing costs.

Typically the contaminated material can be passed through the process more than once, particularly if the levels of contamination after the first pass are still high. Typically material is processed for a second time shortly after its first pass, when the microbial population within the first pass output material is still active. After processing for one or two passes through the composting chamber, the output material can be used straight away or advantageously can be left to mature in static piles to enable fungi to break down complex hydrocarbons such as phenyls and reduce the remaining available hydrocarbons.

The invention also provides a method of producing compost as claimed in claim 23.

An embodiment of the present invention will now be described by way of the following examples:-

### Example 1

A composting mixture was prepared comprising a feeder material with nitrogen and carbon sources. The N source comprised hen pen. The carbon source comprised green waste from agricultural, horticultural and gardening activities such as grass cuttings, forestry limbs, pine needles and leaves, and a mixture of waste fruit and vegetable material obtained from local supermarkets. The precise composition of the waste fruit and vegetable material was not important, but typically starchy vegetables like potatoes, cauliflower, bananas etc are useful as well as leafy materials such as cabbage, lettuce and brussel sprouts. The fruit and vegetable waste can be cooked or uncooked, and serves as an initiator to provide bio-available carbon for boosting the growth of microbial flora present in the composting mixture. The green waste from agricultural, horticultural and gardening activities also provides a good source of carbon, whereas the hen pen is added as a nitrogen source. To these three components was optionally added a quantity of oversized returns from earlier composting runs. The oversized returns typically comprise large and small branches and wood chips that exceed particular size criteria. They are re-added to the composting mixture as a filler or bulking agent in order to keep the mixture aerated, and to supply additional surface area for the growth of the microbial population.

The initial mixture was made up with the fruit and vegetable waste to act as an initiator, and was added to a composting chamber where it was left to compost until the temperature had risen to a steady 50-65°C and other indicators of composting activity were apparent from the output material being sampled. For example, when the output/input mass ratio fell to around 60-80% this indicated that composting activity was degrading material within the chamber. Also, particle size distribution in the output material was sampled periodically to gauge the extent of composting activity; generally, when the particle size distribution dropped, for example below an average of 12mm, this tended to indicate that the composting activity was under way. The achievement of a satisfactory and stable level of composting activity took different periods with different substrates but generally, this was achieved after a period of around 7-14 days with programmed occasional turning by an auger device. The auger performed one partial (120 degree) revolution (lasting 3 to 5 minutes) every 45 minutes, and served to aerate the mixture during the composting process. The composting chamber comprised an elongate tubular chamber with a radial inlet tube at one end, and an axial outlet at the other. The tube is typically mounted on a frame at an angle so that as the material is composted and moved within the tube by the auger from the inlet to the outlet, the material moves up the slope from the inlet to the outlet, until it falls from the outlet for collection. The collected material from the outlets can be sieved for extraction of oversized returns.

After the mixture had been composting for 10-14 days or when the temperature had reached a steady state of between 50-65°C, a test material was added consisting of oil well cuttings that were contaminated by drilling mud. Suitable test materials also include oil field waste slops and drill cuttings contaminated by production fluids from the well. In this example, the test material was added only after the composting process was judged to be under way, and the carbon source provided by the fruit and vegetable waste for the initial start up procedure was judged to be well consumed. After the addition of the test material no further fruit and vegetable waste material was added, and in certain embodiments of the invention, the fruit and vegetable waste material can be omitted entirely, although it is useful to boost the microbial population at an initial phase of the composting procedure, before the introduction of the test material with the long chain hydrocarbons.

The compost mixture was left to compost in the chamber along with the test material for 3-10 days until the contaminating hydrocarbons in the material ejected from the outlet at the composting chamber had reduced to acceptable levels. The output material was optionally re-introduced into the inlet if it was still contaminated. Table 9 shows a flowchart giving general and schematic details of the process used for example 1. Table 1 shows the amounts of materials used in example 1, and the amount of composted product generated.

### Example 2

Example 2 was run in the same way as the earlier example, but with a larger volume of test material, and a smaller proportion of fruit and vegetable waste. The larger component of test materials included a fluid component of 125 litres of condensates or fresh water that was added to the composting mixture during the process in order to increase the moisture content of the material in the chamber. Table 2 shows the amounts of materials used in example 2, and the amount of composted product generated.

### Example 3

During example 3, no fruit and vegetable waste was used, and the run was initiated using the test material, the hen pen and green waste. Additional carbon sources optionally provided included chipped wood and brown bark in the mixture. The brown bark was added as a bulking/filler agent in place of the oversized returns used in earlier examples. This was due to a change in available raw materials, and illustrates that the method can be carried out using various different raw materials, according to seasonal and regional variations in availability. Table 3 shows the amounts of materials used in example 3, and the amount of composted product generated.

### Example 4

Example 4 was also run without added fruit and vegetable waste materials. Chipped wood was also added as a filler material, and the test material included 4 litres of water to assist with the formation of biofilms on the surfaces of the materials. Table 4 shows the amounts of materials used in example 4, and the amount of composted product generated.

### Example 5

Example 5 was run in the same way as example 4 using slightly different amounts of test material. Table 5 shows the amounts of materials used in example 5, and the amount of composted product generated.

### Example 6

Example 6 used the same base formulations used for examples 4 & 5 but using different amounts of nitrogen sources, test material, water and activator. The increased fluidic content aided in enhancing the biofilm formation across all the open surfaces. The test material used included returns from earlier treatment runs. Table 6 shows the amounts of materials used in example 6, and the amount of composted product generated.

### Example 7

This example used the same ratios of materials as in example 4. However, there was a reduction in nitrogen content in the input material and brown bark was added to maintain sufficient air spaces within the blended materials. The volumes of activator and water were also increased, mainly to increase the biofilm establishment and maintain equilibrium. Table 7 shows the amounts of materials used in example 7, and the amount of composted product generated.

### Example 8

Example 8 used the same base formulation as for example 6, but with an increased water volume added to the blended materials. The input material for example 8 included returns from earlier treatment runs. Table 8 shows the amounts of materials used in example 8, and the amount of composted product generated.

In all of the above examples the mixture optionally included an activator comprising a mixture of amino acids and nutrients to serve as precursors for use in the metabolic pathways employed by the microbial population. The typical composition of the activators used included amines, amino acids, purines, pyrimidines, sarsaponin, saponin, carbohydrates, surfactants, nitrates, trace amounts of sulphates of cobalt, copper, dihydrogen, iron, magnesium, manganese, zinc and other minerals.

The composting chamber in all of the above examples was a 300-litre chamber that was typically maintained at 40°C to 75°C. The output from the composting chamber was measured and was typically of the order of 40 to 50 litres of solid materials ejected from the outlet each day and varying volumes (e.g. up to a few mls of leachate every day) of leachate and condensate per day. The leachate and condensate was optionally reintroduced into the chamber after recovery in order to increase the moisture content in the material being treated and/or to process the leachate by a further round of composting treatment. The re-introduction of the leachate into subsequent passes was useful since it boosted the microbial population.

Typically, the materials inserted into the composting chamber were blended into a homogenous mixture of green waste, hen pen, oversized returns and fruit and vegetable waste etc along with the activator used. Typically, this mixture was then blended homogenously with the drill cuttings or other material to be treated in a ratio of around 10 to 35% of test material by weight. Around 60kg was then loaded into the reactor and the composting chamber was then allowed to progress over 2 to 5 hours until the operating temperature of the composting chamber reached the target range. After the temperature had reached the target range between 40°C and 75°C, the rate of turning was then controlled in order to maintain that range. Addition of more input material would result in cooling, and increases in rate of turning would also result in cooling in some instances, because the dense materials forming piles within the composting chambers would keep the heat within the piles, which was disturbed and released by any increase in turning rate. Typical rates of turning were one turn of 120 degree rotation of an auger blade every 45 minutes.

The output materials were monitored to provide an indication of the progress of the reaction. A condenser was provided to condense the gasses liberated from the mixture into different phases, optionally to separate oily fractions with low boiling points from lighter fractions with higher boiling points. Conventional dehumidifiers optionally worked well with early prototypes of the system. Generally, the volume of liquid condensed from the reaction chamber was taken as an indication of the rate of respiration of the microbes. Low volumes of condensed fluid indicated that the microbes were not in a rapid phase of growth. If the volume of condensate recovered, or the core temperature, dropped below a certain range, the amount of fruit and vegetable waste within the composting chamber was optionally temporarily increased to boost the accessible carbon source to the microbes and increase their growth rate. Alternatively, the rate of turning was increased or the amount of oversized materials was increased in order to improve the aeration of the reaction.

### Results and discussion

Table 10 lists the example number together with the main findings for that example. Table 11 summarises the hydrocarbon levels for the different examples.

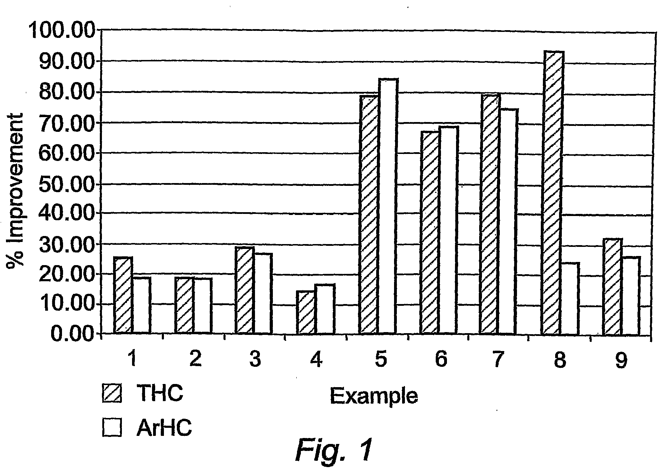

Figure 1 shows a graph of the percentage improvement in hydrocarbons data from Table 11. In Figure 1 and Table 11, THC = total hydrocarbon content, and ArHC = Aromatic hydrocarbon content. It can be seen that trials 4, 6 and 7 result in the best improvements in hydrocarbon levels in the output material. Analysis of output material acquired from Example 1, which had the highest percentage of hydrocarbons in the input material, demonstrated that the total amount of polychlorinated biphenyls and polycondensed aromatic hydrocarbons had been reduced to less than 0.001 and 0.01% respectively of the total output material. This correlates to the output material containing less than 20000ppm hydrocarbons, and in some instances as low as 1000ppm of hydrocarbons in the compost. Worldwide standards for residual hydrocarbons vary but the most stringent typically require levels to contain less than 5% hydrocarbon material. More stringent EU and UK standards dictate a maximum value of 0.5 percent. As such the compost generated by the methods can be used as a non-hazardous product worldwide.

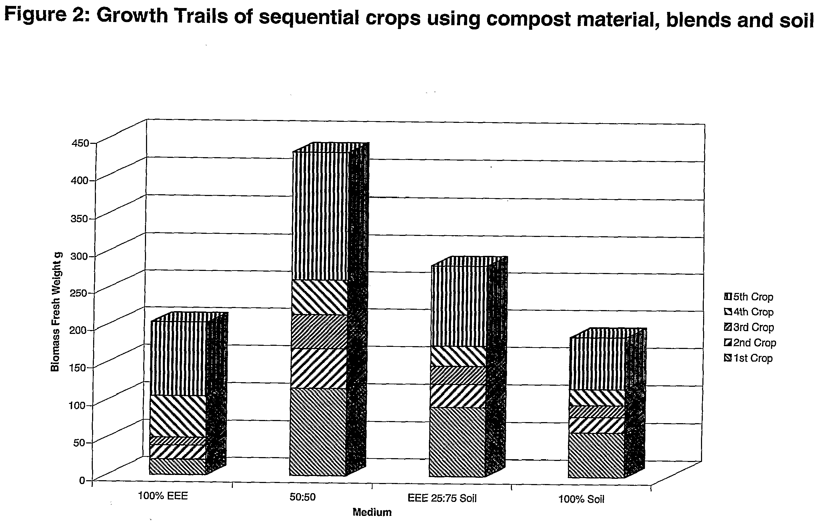

One advantageous benefit of the treatment process was the microbiological breakdown of the oils to produce a compost product fit for use in the environment. To demonstrate the improvement over soil, growth trials were undertaken and the findings are shown in Figure 2. From the data presented in Figure 2, it can be seen that the composted output material from example 6 above is seen to provide a substantial improvement over soil when at 50:50 & 25:75 compost: soil blends.

Further growth trials using the output material from Example 6 are shown in Table 12. Crops grown with 100% soil, 100% compost, 50:50 or 25:75 blends of compost: soil consistently demonstrated significantly higher growth of plants when the blends were used. Figure 2 shows the graph of the Table 12 data. Biomass was assessed periodically by cropping and then weighing the cropped grass. Aggregated results are given in Table 12 showing the various growth responses for the product, its blends with local natural soils, and with the natural soils themselves.

Output material blended at a ratio of 50:50 or 25:75 with garden soil supported enhanced plant growth relative to the plant growth seen with garden soil alone. The 50:50 provided an approximate 100% to 150% increase in plant growth and the 25:75 blend produced approximately 35% to 50% increase in plant growth. Due to high nutrient levels in the 100% compost, it saw initial poor germination and plant growth, but by the end of the growth trial, plant growth supported by 100% output material had exceeded that seen from 100% soil.

Vegetative cover was thickest for the 50:50 and 25:75 blends clearly demonstrating the nutritional benefit of the compost addition to the local soils.

The data therefore demonstrates that although 100% output material can be used to enhance plant growth relative to that gained from soil alone, blends of the output material and soil can achieve better growth and coverage.

The output material and associated blends from Example 6 were assessed for compliance with commercial soil standards relating to the presence of potentially toxic elements (PTEs). Tables 13 and 14 show this data. In Table 13, figures are restated to 30% or 40% organic matter (OM) in accordance with SEPA and EU standards. The output material and blends complied with the UK publicly acceptable standards (PAS 100), the contaminated land exposure agreement assessment guidelines (CLEA), the Scottish Environment Protection Agency (SEPA) standard and draft EU biowaste standards. These standards are designed for use with materials suited for horticulture, landscaping, land remediation and soil manufacturer activities. Table 13 further compares the average compost results taken from numerous batches and the results obtained for one individual trial batch of compost material. Table 14 further shows the CLEA commercial and industrial limits for PTEs.

To further assess the output material, plant uptake of PTEs present was also assessed using grasses as the sample crop. Biomass from crop sets for each growth medium was dried, aggregated and analysed for PTE uptake. Table 15 shows the results of the analysis and compares the presence of elements in the compost material used to grow the crops against the amount taken up by the crop. The degree of PTE uptake in grasses grown on the output material and blends are similar to those for grasses grown on soil alone, and for some (e.g. Cr and Ni) the uptake into grasses grown on output material product was less.

Normal levels for plants, and harvest-related toxicity limits for cereal crops are quoted in Table 16 which compares the levels of PTE uptake by plants against the common EU guidelines. Thus the assessment of plant uptake of PTE indicates no potential hazard, and risks to any grazing animals are minimal. The levels of PTE in both product and its blends conforms to the most rigorous of CLEA limits and indicates that any potential risk to humans is also insignificant.

The ability of PTEs present in the output material to leach out was assessed. Table 17 shows the results of PTEs present in leachate compared to the drinking water standards (SS = suspended solids; E. cond = electrical conductivity of the leachate; BOD = biological oxygen demand). Downflow data represent water passed downward through a column of output material, blend or soil, the water being passed through the matter. Thus, downflow assessment simulates the effect of rainfall. Upflow data represents water allowed to pass upwards through columns of the material and represents the effect of water pooling in combination with the output material, for example as would be expected in regions close to rivers or other bodies of water.

The data in Table 17 demonstrates that the leachate generated by waters passing through the output material and its blends are chemically benign with respect to PTEs.

Use of a chamber facilitates the reaching of a critical mass of the composting mixture after which the composting reaction can more easily become self-sustaining. In this state, the internal temperature of the chamber is typically maintained at least at a minimum temperature required for bacterial activity and the composting reaction can continue with a reduced requirement for alteration of environmental conditions.

Using the formulation of example 6, a typical average initial input material of approximately 95Kg/270L is supplemented for 10 to 16 days, e. g. preferably 13, 14 or 15 days, by a daily input of material of approximately 19Kg/54L. Typically, the composting mixture requires approximately 5 to 8 days to become self-sustaining, with output compost material being generated within a further 1 to 5 days, normally, 2 or 3 days. Optimally, and to ensure a stable reaction is achieved, 20% or more additional material, optionally 25%, may be used over those required to reach critical mass.

The above conditions are not absolute requirements in order to achieve critical mass. Altering the conditions (e.g. temperature, moisture, microbiological agents etc) and formulation (e.g. presence of activators, percentage of organic matter etc) will affect the amount of initial input material, the amount of further input material and the time taken to reach a self-sustaining reaction. Further, use of different sized composting chambers will have different maximum load capabilities and differing abilities to maintain the temperature within the chamber. As such, the size of the chamber can be expected to also affect the time taken to reach critical mass needed to arrive at a self-sustaining reaction. Using different formulations and also the time of year in which the composting reaction takes place can also affect the conditions required to reach critical mass.

In certain embodiments, the aeration of the reaction could be improved by injecting compressed air warmed or cooled to local conditions (or other gasses such as oxygen) into the composting mixture in order to mix the composting mixture and also provide additional oxygen for microbial respiration. Strategic use of the agitation device, e.g. an auger or tilling device, also allows control over the introduction of oxygen into the reaction mixture, ensuring that the oxygen does not cool the reaction mixture temperature and improves output material quality.

A typical composting mixture might contain 20-40% green waste, 20-40% oversized return or bulking agent, 10-30% nitrogen source such as hen pen, and 10% to 20% of contaminated test material or fruit and vegetable waste.

In certain embodiments, additional contaminating hydrocarbons can be added into the mixture in order to increase the available carbon sources for growth of the microbial population.

In certain embodiments the hydrocarbons can be driven off by thermal evaporation from the heat generated by the composting process, and removed from the reaction mixture by condensation, thereby reducing the effect of catabolite repression on the production of hydrocarbon degrading enzymes by the microbes.

After the treatment within the composting chamber, the treated material can be left in a static pile for white rot fungi to establish and break down complex hydrocarbon residues (such as phenyls).

Modifications and improvements can be incorporated without departing from the scope of the invention.

**Table 1 - Test Unit 01, Example 1**

| | SOLID MATERIALS ADDED | | | | | | | | | | | | ACTIVATOR | | PRODUCT | |
|---|---|---|---|---|---|---|---|---|---|---|---|---|---|---|---|---|
| Item | Fruit/ Veg | | HenPen | | Green waste | | Oversized Return | | Test Mat. | | CUMULATIVE | | Description | Vol. Lts | Vol. Lts | Wt. Kg |
| | Vol. Lts | Wt. Kg | Vol. Lts | Wt. Kg | Vol. Lts | Wt. Kg | Vol. Lts | Wt. Kg | Vol. Lts | Wt. Kg | Vol. Lts | Wt. Kg | | | | |
| Sheet Value | **336** | **136.19** | **336** | **155.16** | **672** | **183.80** | **672** | **255.30** | **196** | **318.01** | **2212.00** | **1048.46** | | **11** | **1513** | **673.81** |
| Input %Volume | **15.19** | | **15.19** | | **30.38** | | **30.38** | | **8.86** | | **100** | | | | | |
| Input %Weight | | **12.99** | | **14.80** | | **17.53** | | **24.35** | | **30.33** | **100** | | | | | |

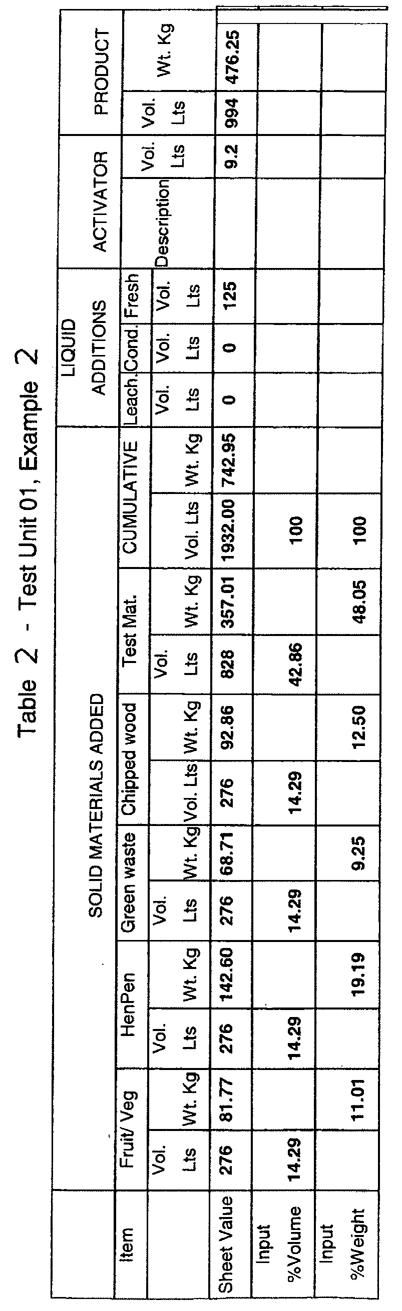

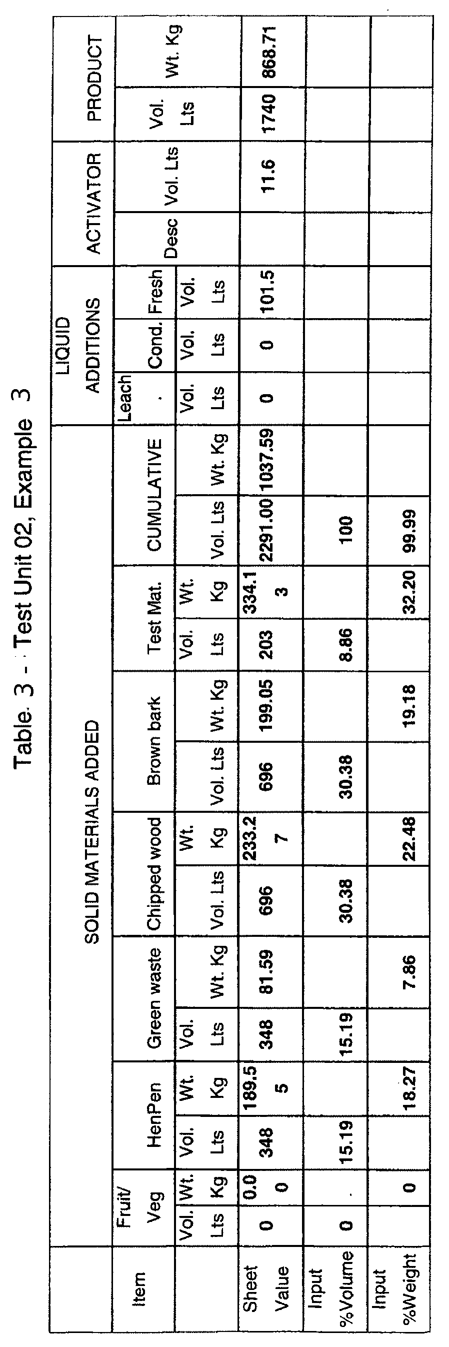

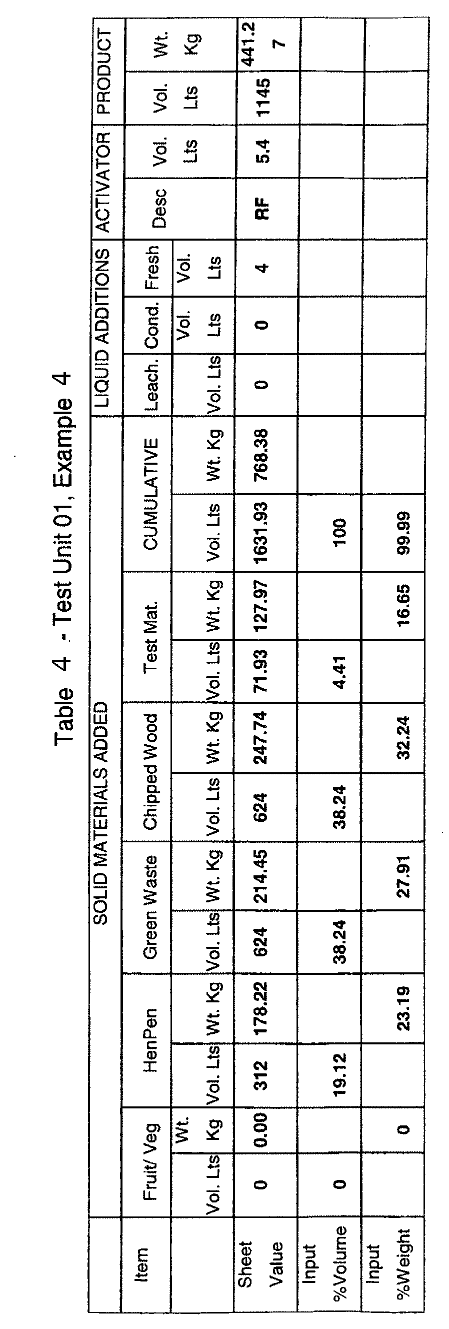

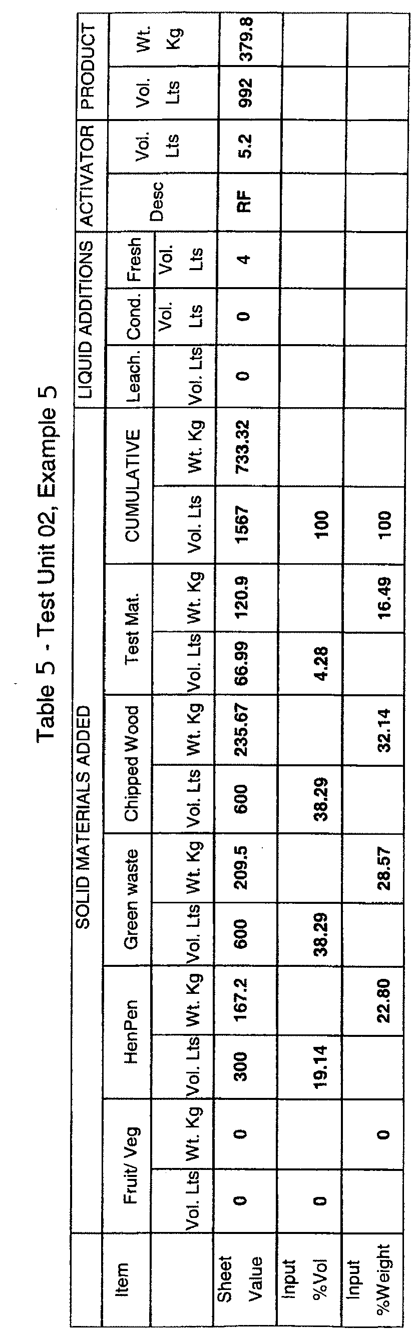

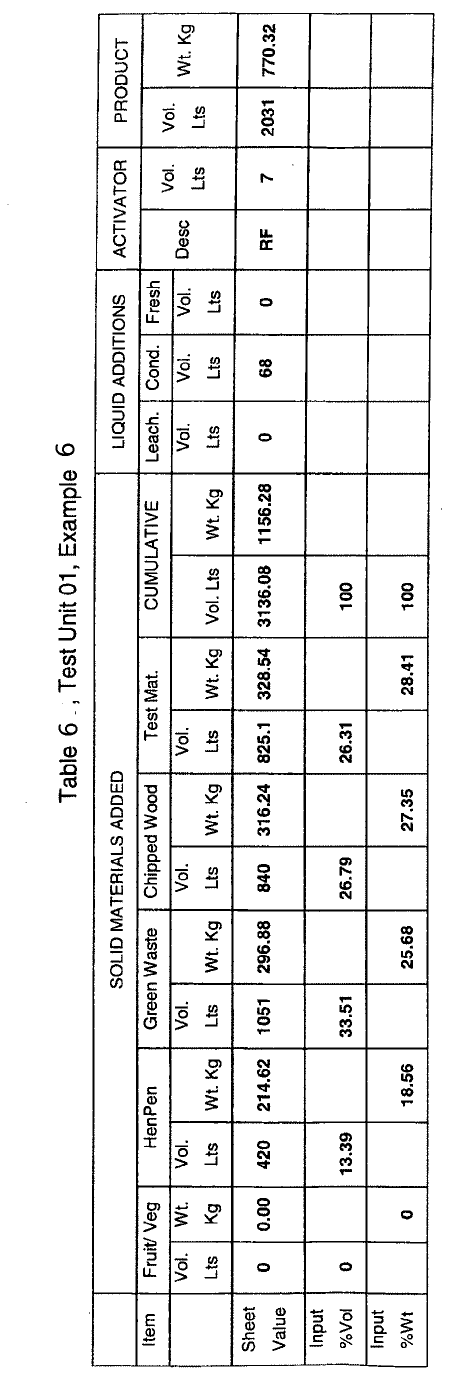

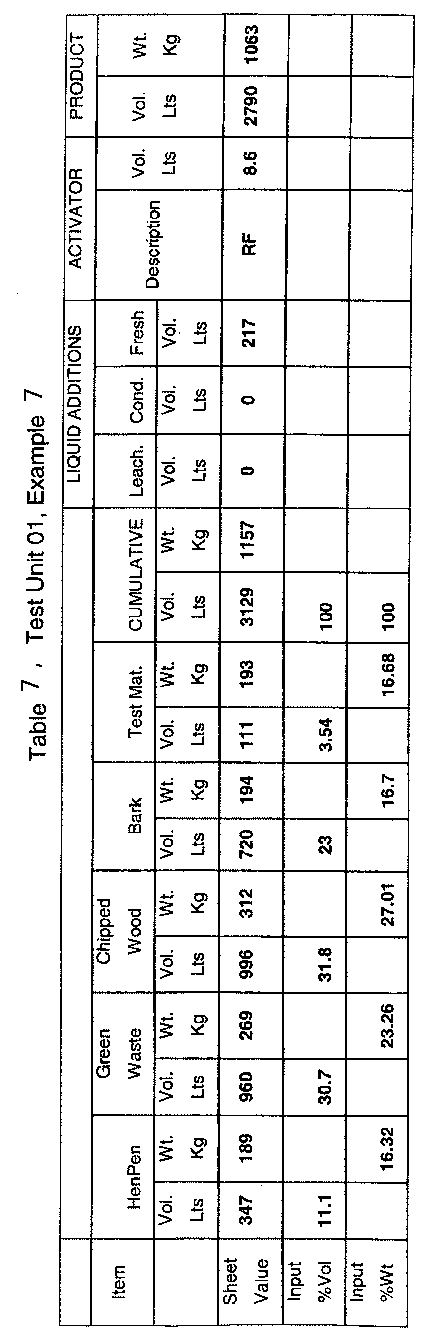

**Table 8 , Test Unit 02, Example 8**

| | | | | | | | | | | | LIQUID ADDITIONS | | | ACTIVATOR | | PRODUCT | |
|---|---|---|---|---|---|---|---|---|---|---|---|---|---|---|---|---|---|
| Item | HenPen | | Green Waste | | Chipped Wood | | Test Mat. | | CUMULATIVE | | Leach. | Cond. | Fresh | Description | Vol. Lts | Vol. Lts | Wt. Kg |
| | Vol. Lts | Wt. Kg | Vol. Lts | Wt. Kg | Vol. Lts | Wt. Kg | Vol. Lts | Wt. Kg | Vol. Us | Wt. Kg | Vol. Lts | Vol. Lts | Vol. Lts | | | | |
| Sheet Value | **456** | **241.8** | **1776** | **466.1** | **1752** | **481.5** | **1251** | **472** | **5235** | **1661** | **0** | **0** | **444** | **RF** | **12.6** | **4346** | **1442** |
| Input %Vol | **8.71** | | **33.92** | | **33.46** | | **23.9** | | **100** | | | | | | | | |
| Input %Wt | | **14.56** | | **28.05** | | **28.98** | | **28.41** | **100** | | | | | | | | |

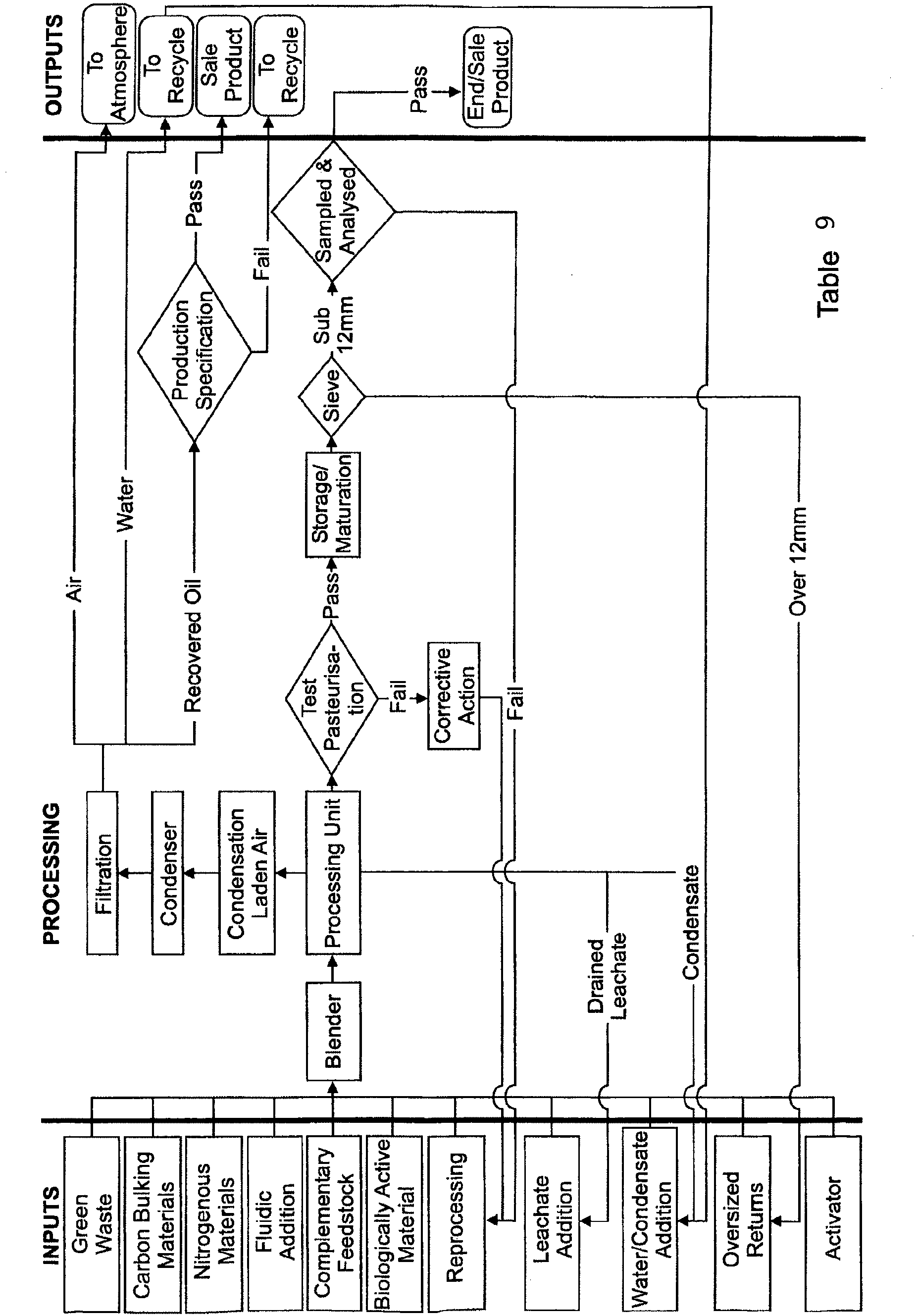

**Tables 10**

| Example | Main Findings |
|---|---|
| 1 | 1. Heavy smell of cuttings on output material |
| | 2. Extraction system being damaged by VOCs in air. |
| 2 | Smell of drill cuttings still from output material. |
| 3 | Heavy smell of cuttings on output material. |
| 4 | Formulation gave greatly improved analysis results. |
| 5 | Formulation gave greatly improved analysis results. |
| 6 | Formulation gave greatly improved analysis results. |
| 7 | Compost unit began to become inactive, possibly due to the summer temperatures drying out the input materials, and possibly leading to loss of microbial mobility. |
| 8 | Compost unit began to become inactive, possibly due to the summer temperatures drying out the input materials, and possibly leading to loss of microbial mobility. |

**Table 11**

| Trial No | Hydrocarbon Level Improvement (%) | |
|---|---|---|
| | THC | Aromatics |
| 1 | 25.26 | 18.69 |
| 2 | 28.73 | 26.75 |
| 3 | 14.65 | 16.44 |
| 4 | 78.95 | 84.41 |
| 5 | 66.77 | 68.45 |
| 6 | 79.43 | 74.52 |
| 7 | 93.77 | 24.07 |
| 8 | 31.73 | 26.09 |

**Table 12**

| **Data from sequential growth trials using compost, blends and garden soil** | | | | | | | | | | |
|---|---|---|---|---|---|---|---|---|---|---|
| | **Individual Crop Masses** | | | | | **Accumulative Crop Masses** | | | | |
| | 1st | 2nd | 3rd | 4th | 5th | 1st | 2nd | 3rd | 4th | 5th |
| 100% Compost | 20 | 19 | 10.25 | 56 | 98 | 20 | 39 | 49.25 | 105.25 | 203.25 |
| 50:50 | 116 | 53 | 45.25 | 47 | 170 | 116 | 169 | 214.25 | 261.25 | 431.25 |
| 25:75 | 92 | 31 | 23.75 | 27 | 108 | 92 | 123 | 146.75 | 173.75 | 281.75 |
| 100% Soil | 59 | 21 | 15.75 | 21 | 69.2 | 59 | 80 | 95.75 | 116.75 | 185.95 |

**Table 13**

| 1 REPORTED RESULTS AGAINST PAS 100 & UK SOIL GUIDELINE VALUES (SGV) | | | | | | | | |
|---|---|---|---|---|---|---|---|---|
| Determinand | Av. compost results (mg/kg) (fm.5 & 6 - 11.2%om) | RA trial sample (mg/kg) (initial solids 21%om) | | PAS 100 | clea sgv (mg/kg) | | | |
| | | | | | residential (with plant uptake) | | commercial | |
| Cd | 0.39 | <0.5 | | 1.5 | 2 | | 1,400 | |
| Cr | 12.8 | 7.7 | | 100 | 130 | | 5,000 | |
| Cu | 70.7 | 72 | | 200 | N/A | | N/A | |
| Hg | 0.64 | <1 | | 1 | 8 | | 480 | |
| Ni | 14 | 9.7 | | 50 | 50 | | 5,000 | |
| Pb | 42.9 | 24 | | 200 | 450 | | 750 | |
| Zn | 338 | 330 | | 400 | N/A | | N/A | |

| 2 RESULTS CORRECTED TO 40% OM AGAINST SEPA POSITION STATEMENT STANDARDS | | | | | | | | |
|---|---|---|---|---|---|---|---|---|
| Determinand | Av. compost results (mg/kg) (corrected from 11.2 to 40%om) (mg/kg) | RA trial sample (mg/kg) (initial solids om=38%) | | | sepa standard (mg/kg) | | | |
| Cd | 0.26 | <0.5 | | | 3 | | | |
| Cr | 8.7 | 7.5 | | | 400 | | | |
| Cu | 47.8 | 70 | | | 200 | | | |
| Hg | 0.43 | <1 | | | 1 | | | |
| Ni | 9.5 | 9.4 | | | 100 | | | |
| Pb | 29 | 23 | | | 200 | | | |
| Zn | 228 | 319 | | | 1,000 | | | |

| 3. RESULTS CORRECTED TO 30% OM AGAINST DRAFT EU BIOWASTE STANDARDS | | | | | | | | |
|---|---|---|---|---|---|---|---|---|
| Determinand | Av. compost results (corrected to 30%om) (mg/kg) | | RA trial sample (mg/kg) (initial solids om=38%) | | EU biowaste standard (mg/kg) | | | |
| | | | | | class i | class ii | | St. biow. |
| Cd | 0.31 | | <0.5 | | 0.7 | 1.5 | | 5 |
| Cr | 10.1 | | 8.7 | | 100 | 150 | | 600 |
| Cu | 55.8 | | 81 | | 100 | 150 | | 600 |
| Hg | 0.51 | | <1 | | 0.5 | 1 | | 5 |
| Ni | 11.1 | | 11 | | 50 | 75 | | 150 |
| Pb | 33.9 | | 27 | | 100 | 150 | | 500 |
| Zn | 266 | | 373 | | 200 | 400 | | 1500 |

**Table 14**

| **Determinand (mg/kg)** | **100% Compost (Adjusted to 40%OM)** | **100% Garden Soil** | **50% Comp** | **25% Comp** | **SEPA Position Statement** | **CLEA - SGV** | |
|---|---|---|---|---|---|---|---|
| | | | | | | **Residential. with Plant Uptake** | **C & I** |
| Cd | <0.5 | <0.5 | <0.5 | <0.5 | 3 | 2 | 1,400 |
| Cr | 7.7 | 36 | 32 | 25 | 400 | 130 | 5,000 |
| Cu | 72 | 30 | 32 | 31 | 200 | - | - |
| Hg | <1 | <0.2 | <0.2 | <0.2 | 1 | 8 | 480 |
| Ni | 9.7 | 23 | 19 | 20 | 100 | 50 | 5,000 |
| Pb | 24 | 53 | 46 | 37 | 200 | 450 | 750 |
| Zn | 330 | 110 | 110 | 130 | 1,000 | - | - |

**TABLE 15**

| **Uptake of PTEs by grasses grown on compost, blends and soil** | | | | | | | | |
|---|---|---|---|---|---|---|---|---|
| **DETERMINAND** | **Trial Sample** | | | | | | | |
| | **Grass** | | | | | | | |
| | **100% Comp** | | **50:50 Comp:Soil** | | **25:75 Comp:Soil** | | **100% Soil** | |
| | **Medium** | **Grass** | **Medium** | **Grass** | **Medium** | **Grass** | **Medium** | **Grass** |
| As mg/kg | 2.2 | 0.08 | 10 | | 7.9 | 0.06 | 12 | 0.13 |
| B mg/kg | 7 | 5.59 | 2.2 | 6.58 | 3 | 5.1 | 1.6 | 5.6 |
| Cd mg/kg | <0.5 | 0.03 | <0.5 | 0.02 | <0.5 | 0.02 | <0.5 | 0.03 |
| Cr mg/kg | 7.7 | 2.1 | 32 | 1.5 | 25 | 0.9 | 36 | 3.9 |
| Cu mg/kg | 72 | 5.3 | 32 | 12.2 | 31 | ND | 30 | 2.4 |
| Hg mg/kg | 0.21 | 0.05 | <0.02 | 0.05 | <0.02 | 0.07 | <0.02 | 0.06 |
| Ni mg/kg | 9.7 | 3.3 | 20 | 2.8 | 19 | 12.8 | 23 | 6.4 |
| Pb mg/kg | 24 | 1 | 46 | 2.2 | 37 | 0.3 | 53 | 0.8 |
| Zn mg/kg | 330 | 65.1 | 110 | 174.4 | 130 | 33.2 | 110 | 37.3 |

**TABLE 16**

| **Uptake of PTEs by grasses grown on blends, compost and soil** | | | | | | |
|---|---|---|---|---|---|---|
| **PTE** | **GRASS GROWN on TRIAL COMPOST** | | | | **COMMON EU GUIDELINES** | |
| | **100% Comp** | **50:50 Comp:Soil** | **25:75 Comp:Soil** | **100% Soil** | **NORMAL PLANT CONC.** | **HARVEST-REL ATED TOXICITY LIMITS** |
| Cd mg/kg | 0.03 | 0.02 | 0.02 | 0.03 | 0.1 - 0.5 | 2.5 - 10 |
| Cr mg/kg | 2.1 | 1.5 | 0.9 | 3.9 | 0.1 - 1 | 1 - 2 |
| Cu mg/kg | 5.3 | 12.2 | ND | 2.4 | 2 - 20 | 15 - 20 |
| Hg mq/kg | 0.05 | 0.05 | 0.07 | 0.06 | 0.003 - 0.086 | 0.5 - 1 |
| Ni mg/kg | 3.3 | 2.8 | 2.8 | 6.4 | 0.1-2 | - |
| Pb mg/kg | 1 | 2.2 | 0.3 | 0.8 | 0.1 - 10 | 10 - 20 |
| Zn mg/kg | 65.1 | 174.4 | 33.2 | 37.3 | 2 - 100 | 150 - 200 |

**TABLE 17 ELUATE AVERAGE RESULTS - BLENDS ANALYSES, COMPOST PRODUCT & GARDEN SOIL.**

| | 100% Envireneer Comp. | | | | 100% Soil | | | | 50% Envireneer | | | | 25% Envireneer | | | | Drinking Water | DW1 Standard |
|---|---|---|---|---|---|---|---|---|---|---|---|---|---|---|---|---|---|---|
| | Downflow | | Upflow | | Downflow | | Upflow | | Downflow | | Upflow | | Downflow | | Upflow | | | |
| | Start | Finish | Start | Finish | Start | Finish | Start | Finish | Start | Finish | Start | Finish | Start | Finish | Start | Finish | | |
| pH | 8.2 | 6.8 | 7.8 | 7 | 10 | 7.5 | 9.5 | 7.4 | 10 | 6.8 | 7.9 | 7.1 | 9.5 | 7 | 9.2 | 7.2 | 6.5 - 10 | 5.5-9.5 |
| SS mg/l | 1100 | 5.5 | 1400 | 160 | 230 | 3 | 260 | <2 | 720 | <2 | 1100 | 37 | 640 | <2 | 650 | 34 | | |
| E. Cond µS/cm | 1600 | 5.5 | 1700 | 160 | 420 | 95 | 440 | 140 | 1200 | 290 | 670 | 170 | 440 | 250 | 470 | 150 | *2,500** | |
| BOD mg/l | 325 | <2 | 245 | >18 | <2 | <2 | <2 | <2 | 71 | <2 | 140 | >20 | 57 | <2 | 41 | >20 | | |
| Na mg/l | 195 | 3.9 | 200 | 6.2 | 4.2 | 0.65 | 5.2 | 0.83 | 104 | 1.4 | 100 | 3.5 | 60 | 2.5 | 60 | 2 | *0.2** | 150 |
| Fe mg/l | 0.45 | 0.36 | 0.39 | 0.21 | 0.5 | 0.07 | 0.22 | 0.42 | 0.43 | 0.56 | 0.5 | 1.8 | 0.4 | 0.12 | 0.43 | 2.8 | 02 | 0.2 |
| Mn mg/l | 0.35 | 0.051 | 0.3 | 0.53 | 0.03 | <0.01 | 0.043 | 0.38 | 0.01 | 0.11 | 0.32 | 0.84 | 0.18 | 0.12 | 0.14 | 1.3 | 0.05 | 0.05 |
| SO4 mg/l | 120 | <24 | 150 | <24 | 24 | <24 | <24 | <24 | 160 | <24 | 150 | <24 | 120 | <24 | 140 | <24 | *250** | 250 |
| Cd mg/l | <0.002 | <0.002 | <0.002 | <0.002 | <0.002 | <0.002 | <0.002 | <0.002 | <0.002 | <0.002 | <0.002 | <0.002 | <0.002 | <0.002 | <0.002 | <0.002 | 0.005 | 0.005 |
| Cr mg/l | <0.01 | <0.01 | <0.01 | <0.01 | <0.01 | <0.01 | <0.01 | <0.01 | <0.01 | <0.01 | <0.01 | <0.01 | <0.01 | <0.01 | <0.01 | <0.01 | 0.05 | 0.05 |
| Cu mg/l | 0.16 | 0.015 | 0.17 | 0.025 | 0.05 | 0.012 | 0.014 | <0.01 | 0.08 | 0.011 | 0.08 | 0.013 | 0.04 | 0.012 | 0.04 | <0.01 | 2 | 3 |
| Hg mg/l | <0.001 | <0.001 | <0.001 | <0.001 | <0.001 | <0.001 | <0.001 | <0.001 | <0.001 | <0.001 | <0.001 | <0.001 | <0.001 | <0.001 | <0.001 | <0.001 | 0.001 | 0.001 |
| Ni mg/l | 0.024 | <0.02 | 0.031 | <0.02 | <0.02 | <0.02 | <0.02 | <0.02 | 0.022 | <0.02 | <0.02 | <0.02 | <0.02 | <0.02 | <0.02 | <0.02 | 0.02 | 0.05 |
| Pb mg/l | <0.05 | <0.05 | <0.05 | <0.05 | <0.05 | <0.05 | <0.05 | <0.05 | <0.05 | <0.05 | <0.05 | <0.05 | <0.05 | <0.05 | <0.05 | <0.05 | 0.025/0.01 | 0.05 |
| Zn mg/l | 0.027 | 0.055 | 0.22 | 0.16 | 0.05 | 0.03 | 0.01 | 0.02 | 0.13 | 0.05 | 0.11 | 0.08 | 0.07 | 0.04 | 0.06 | 0.05 | | 5 |
| NH3-N mg/l | 17 | <0.02 | 19 | 11 | 0.21 | <0.02 | <0.02 | 0.4 | <0.02 | <0.02 | 0.98 | 7 | <0.02 | <0.02 | 2.1 | 5.1 | 0.5 | 0.5 |
| NO3-N mg/l | <2.2 | <2.2 | <2.2 | <2.2 | <2.2 | 11 | <2.2 | <2.2 | <2.2 | <2.2 | <2.2 | <2.2 | 40 | <2.2 | <2.2 | <2.2 | 50 | 50 |

| | | | | | | | | | | | | | | | | | | |
|---|---|---|---|---|---|---|---|---|---|---|---|---|---|---|---|---|---|---|
| * *Italics are Schedule 2 - Indicator parameters; all values quoted as soluble concentration* | | | | | | | | | | | | | | | | | | |

## Claims

1. A method of treating waste and by product materials, wherein the waste and by product materials are generated by the drilling or operation of an oil or gas well, wherein the treatment comprises composting the waste and by product materials with microbes and with a feeder material containing C- and N- sources for the microbes in a composting mixture, **characterised in that** the microbes are thermophilic, and the method comprises treating the waste and by product materials in a treatment chamber incorporating a tilling device to mix the waste and by product materials, and wherein the tilling device is rotated intermittently during the treatment process, and wherein the rotation of the tilling device is controlled in order to maintain the temperature inside the chamber in a range from 40°C to 75°C.

2. A method as claimed in claim 1, wherein the chamber is cylindrical and wherein the tilling device has blades that extend across substantially the whole diameter of the cylindrical chamber.

3. A method as claimed in claim 1 or claim 2, wherein the chamber has an axis, and wherein during the method the axis is oriented upwards so that the materials being composted fall to the bottom of the chamber and are lifted by the tilling device toward the top of the chamber.

4. A method as claimed in any preceding claim wherein the tilling device is a rotary auger.

5. A method as claimed in any preceding claim, wherein the chamber has an axis, an inlet and an outlet, and wherein the axis between the inlet and the outlet is tilted with respect to the horizontal during the method.

6. A method as claimed in any preceding claim, wherein the chamber has a rectangular cross section.

7. A method as claimed in any preceding claim, wherein the waste and by-product materials are contaminated by organic compounds.

8. A method as claimed in claim 7, wherein the organic compounds comprise production fluids from the well.

9. A method as claimed in any preceding claim, wherein the waste and by-product materials are contaminated by drilling fluid.

10. A method as claimed in any preceding claim, wherein the waste and by product materials are contaminated by inorganic compounds

11. A method as claimed in claim 10, wherein the inorganic compounds comprise sulphates, chlorides, formates or heavy metals.

12. A method as claimed in any preceding claim, wherein the waste materials comprise biological waste, animal waste and food wastes added to the composting chamber along with the oil or gas field waste or by product materials.

13. A method as claimed in any preceding claim, wherein the composting involves an endogenous microbial population on the composted mixture.

14. A method as claimed in any preceding claim, wherein the feeder material comprises feeder material that is high in carbon sources.

15. A method as claimed in any preceding claim, wherein the feeder material comprises fruit or vegetable waste.

16. A method as claimed in any preceding claim, wherein the materials being treated are mixed with feeder material that is high in nitrogen sources.

17. A method as claimed in any preceding claim, wherein the feeder material comprises plant waste, leaves, grass and plant cuttings, bark, twigs, sawdust, wood shavings, chipped wood, shredded paper, cardboard, animal bedding or fish waste.

18. A method as claimed in any preceding claim, wherein the waste products are hydrocarbon-contaminated waste products containing carbon residues with chain lengths exceeding five carbon atoms.

19. A method as claimed in any preceding claim, wherein an exogenous source of microbes is added to the composting mix in order to degrade particular contaminants on the waste or by-product materials.

20. A method as claimed in any preceding claim, wherein the carbon and nitrogen composition of the feeder material is manipulated to boost the microbial population in order to achieve a population suitable for effective degradation of hydrocarbon contaminants present on the waste materials being treated.

21. A method as claimed in any preceding claim, wherein the carbon and nitrogen composition of the feeder material is manipulated throughout the composting operation to control the available amounts of carbon from the feeder material and the waste materials.

22. A method as claimed in any preceding claim, wherein the materials being treated comprise drill cuttings.

23. A method of producing compost using the method of claim 1, the method comprising adding oil and/ or gas field waste materials to a composting mixture comprising thermophilic microbes and a feeder material containing C- and N- sources for the thermophilic microbes, and composting the composting mixture in a composting chamber incorporating a tilling device to mix the waste and by product materials, and wherein the method includes rotating the tilling device intermittently during the method so that the microbial population in the composting mixture degrades metabolic substrates from the oil and/ or gas field waste materials, wherein the method includes maintaining the temperature inside the chamber in a range from 40°C to 75°C by controlling the rotation of the tilling device.

24. A method as claimed in any preceding claim, wherein the materials being treated include an activator comprising a mixture of amino acids and nutrients to serve as precursors for use in the metabolic pathways employed by the microbial population.

25. A method as claimed in any preceding claim, wherein materials treated by the method and recovered from the composting mixture are treated at least once more by the method.

26. A method as claimed in claim 25, wherein the materials recovered from the composting mixture and treated at least once more comprise leachate and distillate fluids, which are re-introduced into the same or a different composting mixture after recovery.

27. A method as claimed in any preceding claim, wherein liquid is removed from the composting reaction and wherein the volume of liquid removed from the composting reaction is measured, and the quantity of feeder material within the reaction is adjusted, the rate of turning is adjusted, and/or the amount of oversized materials or fluids present in the mixture is adjusted, in accordance with the volume of liquid condensed from the composting reaction.

28. A method as claimed in any preceding claim, wherein bulky materials are added to the composting mixture to enhance the aeration of the mixture.

29. A method as claimed in any preceding claim, wherein compressed gas is injected into the composting mixture during the process.

30. A method as claimed in claim 29, wherein the compressed gas is warmed or cooled before injection.

31. A method as claimed in any preceding claim, wherein additional contaminating hydrocarbons are added into the composting mixture in order to increase the available carbon sources for growth of the microbial population.

32. A method as claimed in any preceding claim, wherein treated material is left in a maturation pile for fungi to establish and break down complex hydrocarbon residues.

33. A method as claimed in any preceding claim, wherein the process is continued until the output material comprises 5 percent (50,000ppm) or less total hydrocarbon content.

34. A method as claimed in any preceding claim, wherein the process is continued until the output material comprises 2 percent (20,000ppm) or less total hydrocarbon content.

35. A method as claimed in any preceding claim, wherein the process is continued until the output material comprises 0.1 percent (1,000ppm) or less total hydrocarbon content.

36. A method as claimed in any preceding claim wherein sufficient material is treated within the composting chamber such that the composting reaction reaches a point of critical mass.

37. A method as claimed in any preceding claim, wherein the composting reaction is self-sustaining.

## Patentansprüche

1. Ein Verfahren zum Behandeln von Abfall- und Nebenproduktmaterialien, wobei die Abfall- und Nebenproduktmaterialien durch das Bohren oder den Betrieb eines Öl- oder Gasbohrlochs erzeugt werden, wobei die Behandlung das Kompostieren der Abfall- und Nebenproduktmaterialien mit Mikroben und mit einem Füttermaterial, das C- und N-Quellen für die Mikroben enthält, in einer Kompostiermischung beinhaltet, **dadurch gekennzeichnet, dass** die Mikroben thermophil sind, und wobei das Verfahren das Behandeln der Abfall- und Nebenproduktmaterialien in einer Behandlungskammer beinhaltet, die eine Bearbeitungsvorrichtung zum Mischen der Abfall- und Nebenproduktmaterialien einschließt, und wobei die Bearbeitungsvorrichtung während des Behandlungsprozesses intermittierend rotiert wird, und wobei die Rotation der Bearbeitungsvorrichtung gesteuert wird, um die Temperatur innerhalb der Kammer in einem Bereich von 40 °C bis 75 °C zu halten.

2. Verfahren gemäß Anspruch 1, wobei die Kammer zylinderförmig ist, und wobei die Bearbeitungsvorrichtung Flügel aufweist, die sich im Wesentlichen über den gesamten Durchmesser der zylinderförmigen Kammer erstrecken.

3. Verfahren gemäß Anspruch 1 oder Anspruch 2, wobei die Kammer eine Achse aufweist, und wobei während des Verfahrens die Achse nach oben ausgerichtet ist, so dass die Materialien, welche kompostiert werden, auf den Boden der Kammer fallen und von der Bearbeitungsvorrichtung zu dem oberen Ende der Kammer hin befördert werden.

4. Verfahren gemäß einem der vorhergehenden Ansprüche, wobei die Bearbeitungsvorrichtung eine Drehschnecke ist.

5. Verfahren gemäß einem der vorhergehenden Ansprüche, wobei die Kammer eine Achse, einen Einlass und einen Auslass aufweist, und wobei während des Verfahrens die Achse zwischen dem Einlass und dem Auslass in Bezug auf die Horizontale geneigt ist.

6. Verfahren gemäß einem der vorhergehenden Ansprüche, wobei die Kammer einen rechteckigen Querschnitt aufweist.

7. Verfahren gemäß einem der vorhergehenden Ansprüche, wobei die Abfall- und Nebenproduktmaterialien durch organische Verbindungen verunreinigt sind.

8. Verfahren gemäß Anspruch 7, wobei die organischen Verbindungen Förderfluide aus dem Bohrloch beinhalten.

9. Verfahren gemäß einem der vorhergehenden Ansprüche, wobei die Abfall- und Nebenproduktmaterialien durch Bohrspülung verunreinigt sind.

10. Verfahren gemäß einem der vorhergehenden Ansprüche, wobei die Abfall- und Nebenproduktmaterialien durch anorganische Verbindungen verunreinigt sind.

11. Verfahren gemäß Anspruch 10, wobei die anorganischen Verbindungen Sulfate, Chloride, Formiate oder Schwermetalle beinhalten.

12. Verfahren gemäß einem der vorhergehenden Ansprüche, wobei die Abfallmaterialien biologischen Abfall, tierischen Abfall und Lebensmittelabfälle, die der Kompostierkammer zusammen mit den Öl- oder Gasfeldabfall- oder-nebenproduktmaterialien zugegeben werden, beinhalten.

13. Verfahren gemäß einem der vorhergehenden Ansprüche, wobei das Kompostieren eine endogene mikrobielle Population auf der kompostierten Mischung involviert.

14. Verfahren gemäß einem der vorhergehenden Ansprüche, wobei das Füttermaterial Füttermaterial beinhaltet, das reich an Kohlenstoffquellen ist.

15. Verfahren gemäß einem der vorhergehenden Ansprüche, wobei das Füttermaterial Obst- oder Gemüseabfall beinhaltet.

16. Verfahren gemäß einem der vorhergehenden Ansprüche, wobei die Materialien, welche behandelt werden, mit Füttermaterial gemischt werden, das reich an Stickstoffquellen ist.

17. Verfahren gemäß einem der vorhergehenden Ansprüche, wobei das Füttermaterial Pflanzenabfall, Blätter, Gras- und Pflanzenschnitt, Rinde, Zweige, Sägemehl, Holzspäne, zerkleinertes Holz, Papierschnitzel, Karton, Tierstreu oder Fischabfall beinhaltet.

18. Verfahren gemäß einem der vorhergehenden Ansprüche, wobei die Abfallprodukte mit Kohlenwasserstoff verunreinigte Abfallprodukte sind, die Kohlenstoffreste mit Kettenlängen, die fünf Kohlenstoffatome überschreiten, enthalten.

19. Verfahren gemäß einem der vorhergehenden Ansprüche, wobei dem Kompostiergemisch eine exogene Mikrobenquelle zugegeben wird, um bestimmte Verunreinigungen auf den Abfall- oder Nebenproduktmaterialien abzubauen.

20. Verfahren gemäß einem der vorhergehenden Ansprüche, wobei die Kohlenstoff- und Stickstoffzusammensetzung des Füttermaterials manipuliert wird, um die mikrobielle Population zu stärken, um eine Population zu erreichen, die für den effektiven Abbau von Kohlenwasserstoffverunreinigungen, die auf den Abfallmaterialien, welche behandelt werden, vorhanden sind, geeignet ist.

21. Verfahren gemäß einem der vorhergehenden Ansprüche, wobei die Kohlenstoff- und Stickstoffzusammensetzung des Füttermaterials während des Kompostierbetriebs manipuliert wird, um die verfügbaren Mengen an Kohlenstoff aus dem Füttermaterial und den Abfallmaterialien zu steuern.

22. Verfahren gemäß einem der vorhergehenden Ansprüche, wobei die Materialien, welche behandelt werden, Bohrgut beinhalten.

23. Ein Verfahren zum Herstellen von Kompost unter Verwendung des Verfahrens gemäß Anspruch 1, wobei das Verfahren Folgendes beinhaltet: Zugeben von Öl- und/oder Gasfeldabfallmaterialien zu einer Kompostiermischung, beinhaltend thermophile Mikroben und ein Füttermaterial, das C- und N-Quellen für die thermophilen Mikroben enthält, und Kompostieren der Kompostiermischung in einer Kompostierkammer, die eine Bearbeitungsvorrichtung zum Mischen der Abfall- und Nebenproduktmaterialien einschließt, und wobei das Verfahren das Rotieren der Bearbeitungsvorrichtung während des Verfahrens auf intermittierende Weise umfasst, so dass die mikrobielle Population in der Kompostiermischung metabolische Substrate aus den Öl- und/oder Gasfeldabfallmaterialien abbaut, wobei das Verfahren das Halten der Temperatur innerhalb der Kammer in einem Bereich von 40 °C bis 75 °C durch das Steuern der Rotation der Bearbeitungsvorrichtung umfasst.

24. Verfahren gemäß einem der vorhergehenden Ansprüche, wobei die Materialien, welche behandelt werden, einen Aktivator umfassen, beinhaltend eine Mischung von Aminosäuren und Nährstoffen, um als Präkursoren zur Verwendung in den von der mikrobiellen Population genutzten metabolischen Wegen zu dienen.

25. Verfahren gemäß einem der vorhergehenden Ansprüche, wobei mit dem Verfahren behandelte und aus der Kompostiermischung wiedergewonnene Materialien mindestens ein weiteres Mal mit dem Verfahren behandelt werden.

26. Verfahren gemäß Anspruch 25, wobei die aus der Kompostiermischung wiedergewonnenen und mindestens ein weiteres Mal behandelten Materialien Sickerwasser und Destillatfluide beinhalten, die nach der Wiedergewinnung wieder in dieselbe oder eine andere Kompostiermischung eingeführt werden.

27. Verfahren gemäß einem der vorhergehenden Ansprüche, wobei Flüssigkeit aus der Kompostierreaktion entfernt wird, und wobei das Volumen der aus der Kompostierreaktion entfernten Flüssigkeit gemessen wird und die Quantität des Füttermaterials innerhalb der Reaktion angepasst wird, die Drehrate angepasst wird und/oder die Menge an übergroßen Materialien oder Fluiden, die in der Mischung vorhanden sind, angepasst wird, in Übereinstimmung mit dem Volumen an aus der Kompostierreaktion kondensierter Flüssigkeit.

28. Verfahren gemäß einem der vorhergehenden Ansprüche, wobei der Kompostiermischung voluminöse Materialien zugegeben werden, um die Belüftung der Mischung zu verbessern.

29. Verfahren gemäß einem der vorhergehenden Ansprüche, wobei während des Prozesses komprimiertes Gas in die Kompostiermischung eingespeist wird.

30. Verfahren gemäß Anspruch 29, wobei das komprimierte Gas vor der Einspeisung erwärmt oder gekühlt wird.

31. Verfahren gemäß einem der vorhergehenden Ansprüche, wobei der Kompostiermischung zusätzliche verunreinigende Kohlenwasserstoffe zugegeben werden, um die verfügbaren Kohlenstoffquellen für das Wachstum der mikrobiellen Population zu erhöhen.

32. Verfahren gemäß einem der vorhergehenden Ansprüche, wobei behandeltes Material in einem Reifehaufen belassen wird, damit sich Pilze ansiedeln und komplexe Kohlenwasserstoffreste aufspalten.

33. Verfahren gemäß einem der vorhergehenden Ansprüche, wobei der Prozess fortgesetzt wird, bis das Ausgabematerial insgesamt 5 Prozent (50 000 ppm) oder weniger Kohlenwasserstoffgehalt beinhaltet.

34. Verfahren gemäß einem der vorhergehenden Ansprüche, wobei der Prozess fortgesetzt wird, bis das Ausgabematerial insgesamt 2 Prozent (20 000 ppm) oder weniger Kohlenwasserstoffgehalt beinhaltet.

35. Verfahren gemäß einem der vorhergehenden Ansprüche, wobei der Prozess fortgesetzt wird, bis das Ausgabematerial insgesamt 0,1 Prozent (1 000 ppm) oder weniger Kohlenwasserstoffgehalt beinhaltet.

36. Verfahren gemäß einem der vorhergehenden Ansprüche, wobei ausreichend Material innerhalb der Kompostierkammer behandelt wird, so dass die Kompostierreaktion einen Punkt kritischer Masse erreicht.

37. Verfahren gemäß einem der vorhergehenden Ansprüche, wobei die Kompostierreaktion selbsterhaltend ist.

## Revendications

1. Une méthode de traitement de matériaux de déchets et de sous-produits, dans laquelle les matériaux de déchets et de sous-produits sont générés par le forage ou l'exploitation d'un puits de pétrole ou de gaz, dans laquelle le traitement comprend le compostage des matériaux de déchets et de sous-produits à l'aide de microbes et à l'aide d'un matériau alimentateur contenant des sources de C et de N pour les microbes dans un mélange de compostage, **caractérisée en ce que** les microbes sont thermophiles, et la méthode comprend le traitement des matériaux de déchets et de sous-produits dans une chambre de traitement incorporant un dispositif de retournement pour mélanger les matériaux de déchets et de sous-produits, et dans laquelle le dispositif de retournement est tourné de façon intermittente au cours du processus de traitement, et dans laquelle la rotation du dispositif de retournement est contrôlée afin de maintenir la température à l'intérieur de la chambre dans un intervalle allant de 40 °C à 75 °C.

2. Une méthode telle que revendiquée dans la revendication 1, dans laquelle la chambre est cylindrique et dans laquelle le dispositif de retournement a des pales qui s'étendent de part et d'autre substantiellement de la totalité du diamètre de la chambre cylindrique.

3. Une méthode telle que revendiquée dans la revendication 1 ou la revendication 2, dans laquelle la chambre a un axe, et dans laquelle, au cours de la méthode, l'axe est orienté vers le haut de sorte que les matériaux en train d'être compostés tombent au fond de la chambre et soient soulevés par le dispositif de retournement vers le haut de la chambre.

4. Une méthode telle que revendiquée dans n'importe quelle revendication précédente dans laquelle le dispositif de retournement est une tarière rotative.

5. Une méthode telle que revendiquée dans n'importe quelle revendication précédente, dans laquelle la chambre a un axe, une entrée et une sortie, et dans laquelle l'axe entre l'entrée et la sortie est incliné par rapport à l'horizontale au cours de la méthode.

6. Une méthode telle que revendiquée dans n'importe quelle revendication précédente, dans laquelle la chambre a une coupe transversale rectangulaire.

7. Une méthode telle que revendiquée dans n'importe quelle revendication précédente, dans laquelle les matériaux de déchets et de sous-produits sont contaminés par des composés organiques.

8. Une méthode telle que revendiquée dans la revendication 7, dans laquelle les composés organiques comprennent des fluides de production provenant du puits.

9. Une méthode telle que revendiquée dans n'importe quelle revendication précédente, dans laquelle les matériaux de déchets et de sous-produits sont contaminés par du fluide de forage.

10. Une méthode telle que revendiquée dans n'importe quelle revendication précédente, dans laquelle les matériaux de déchets et de sous-produits sont contaminés par des composés inorganiques.

11. Une méthode telle que revendiquée dans la revendication 10, dans laquelle les composés inorganiques comprennent des sulfates, des chlorures, des formiates ou des métaux lourds.

12. Une méthode telle que revendiquée dans n'importe quelle revendication précédente, dans laquelle les matériaux de déchets comprennent des déchets biologiques, des déchets animaux et des déchets alimentaires ajoutés à la chambre de compostage de pair avec les matériaux de déchets ou de sous-produits de champ de pétrole ou de gaz.

13. Une méthode telle que revendiquée dans n'importe quelle revendication précédente, dans laquelle le compostage implique une population microbienne endogène sur le mélange composté.

14. Une méthode telle que revendiquée dans n'importe quelle revendication précédente, dans laquelle le matériau alimentateur comprend un matériau alimentateur qui est riche en sources de carbone.

15. Une méthode telle que revendiquée dans n'importe quelle revendication précédente, dans laquelle le matériau alimentateur comprend des déchets de fruits ou de légumes.

16. Une méthode telle que revendiquée dans n'importe quelle revendication précédente, dans laquelle les matériaux en train d'être traités sont mélangés avec du matériau alimentateur qui est riche en sources d'azote.

17. Une méthode telle que revendiquée dans n'importe quelle revendication précédente, dans laquelle le matériau alimentateur comprend des déchets végétaux, des feuilles, de l'herbe coupée et des chutes de plantes, de l'écorce, des brindilles, de la sciure de bois, des planures, des copeaux de bois, du papier déchiqueté, du carton, de la litière pour animaux ou des résidus de poissons.

18. Une méthode telle que revendiquée dans n'importe quelle revendication précédente, dans laquelle les produits de déchets sont des produits de déchets contaminés par des hydrocarbures contenant des résidus de carbone avec des longueurs de chaîne dépassant cinq atomes de carbone.

19. Une méthode telle que revendiquée dans n'importe quelle revendication précédente, dans laquelle une source exogène de microbes est ajoutée au mélange de compostage afin de dégrader des contaminants particuliers sur les matériaux de déchets ou de sous-produits.

20. Une méthode telle que revendiquée dans n'importe quelle revendication précédente, dans laquelle la composition de carbone et d'azote du matériau alimentateur est manipulée pour encourager la population microbienne afin d'obtenir une population convenant à une dégradation effective de contaminants d'hydrocarbures présents sur les matériaux de déchets en train d'être traités.

21. Une méthode telle que revendiquée dans n'importe quelle revendication précédente, dans laquelle la composition de carbone et d'azote du matériau alimentateur est manipulée tout au long du fonctionnement de compostage pour contrôler les quantités disponibles de carbone provenant du matériau alimentateur et des matériaux de déchets.

22. Une méthode telle que revendiquée dans n'importe quelle revendication précédente, dans laquelle les matériaux en train d'être traités comprennent des déblais de forage.

23. Une méthode pour produire du compost en utilisant la méthode de la revendication 1, la méthode comprenant l'ajout de matériaux de déchets de champ de pétrole et/ou de gaz à un mélange de compostage comprenant des microbes thermophiles et un matériau alimentateur contenant des sources de C et de N pour les microbes thermophiles, et le compostage du mélange de compostage dans une chambre de compostage incorporant un dispositif de retournement pour mélanger les matériaux de déchets et de sous-produits, et la méthode incluant la rotation du dispositif de retournement de façon intermittente au cours de la méthode de sorte que la population microbienne dans le mélange de compostage dégrade des substrats métaboliques des matériaux de déchets de champ de pétrole et/ou de gaz, la méthode incluant le maintien de la température à l'intérieur de la chambre dans un intervalle allant de 40 °C à 75 °C en contrôlant la rotation du dispositif de retournement.

24. Une méthode telle que revendiquée dans n'importe quelle revendication précédente, dans laquelle les matériaux en train d'être traités incluent un activateur comprenant un mélange d'acides aminés et de nutriments pour servir de précurseurs destinés à être utilisés dans les voies métaboliques employées par la population microbienne.

25. Une méthode telle que revendiquée dans n'importe quelle revendication précédente, dans laquelle les matériaux traités par la méthode et récupérés du mélange de compostage sont traités au moins encore une fois par la méthode.

26. Une méthode telle que revendiquée dans la revendication 25, dans laquelle les matériaux récupérés du mélange de compostage et traités au moins encore une fois comprennent du lessivat et des fluides de distillat, lesquels sont réintroduits dans le même mélange de compostage ou dans un mélange de compostage différent après récupération.

27. Une méthode telle que revendiquée dans n'importe quelle revendication précédente, dans laquelle du liquide est éliminé de la réaction de compostage et dans laquelle le volume de liquide éliminé de la réaction de compostage est mesuré, et la quantité de matériau alimentateur au sein de la réaction est ajustée, la vitesse de renversement est ajustée, et/ou la quantité de matériaux surdimensionnés ou de fluides présents dans le mélange est ajustée, conformément au volume de liquide condensé à partir de la réaction de compostage.

28. Une méthode telle que revendiquée dans n'importe quelle revendication précédente, dans laquelle des matériaux encombrants sont ajoutés au mélange de compostage pour améliorer l'aération du mélange.

29. Une méthode telle que revendiquée dans n'importe quelle revendication précédente, dans laquelle du gaz comprimé est injecté dans le mélange de compostage au cours du processus.

30. Une méthode telle que revendiquée dans la revendication 29, dans laquelle le gaz comprimé est chauffé ou refroidi avant injection.

31. Une méthode telle que revendiquée dans n'importe quelle revendication précédente, dans laquelle des hydrocarbures contaminants supplémentaires sont ajoutés dans le mélange de compostage afin d'augmenter les sources de carbone disponibles pour la croissance de la population microbienne.

32. Une méthode telle que revendiquée dans n'importe quelle revendication précédente, dans laquelle le matériau traité est laissé dans une pile de maturation pour que des champignons s'y établissent et décomposent des résidus d'hydrocarbure complexes.

33. Une méthode telle que revendiquée dans n'importe quelle revendication précédente, dans laquelle le processus est continué jusqu'à ce que le matériau de sortie comprenne une teneur totale en hydrocarbures de 5 pour cent (50 000 ppm) ou moins.

34. Une méthode telle que revendiquée dans n'importe quelle revendication précédente, dans laquelle le processus est continué jusqu'à ce que le matériau de sortie comprenne une teneur totale en hydrocarbures de 2 pour cent (20 000 ppm) ou moins.

35. Une méthode telle que revendiquée dans n'importe quelle revendication précédente, dans laquelle le processus est continué jusqu'à ce que le matériau de sortie comprenne une teneur totale en hydrocarbures de 0,1 pour cent (1 000 ppm) ou moins.

36. Une méthode telle que revendiquée dans n'importe quelle revendication précédente dans laquelle suffisamment de matériau est traité au sein de la chambre de compostage de sorte que la réaction de compostage atteigne un point de masse critique.

37. Une méthode telle que revendiquée dans n'importe quelle revendication précédente, dans laquelle la réaction de compostage est autosuffisante.
